# EUROPÄISCHE PATENTSCHRIFT

(11) **EP 3 263 976 B1**
(45) Veröffentlichungstag und Bekanntmachung des Hinweises auf die Patenterteilung: **19.04.2023**
(21) Anmeldenummer: 16176355.2
(22) Anmeldetag: 27.06.2016
(51) Int. Cl.: F21S 41/20, F21S 41/55, F21S 43/20, F21S 43/50, B29C 45/16

(54) **ANORDNUNG UMFASSEND EINE LICHTSCHEIBE EINER FAHRZEUGLEUCHTE SOWIE MINDESTENS EIN AUF DEREN AUSSENSEITE ANGEORDNETES BAUTEIL**
ASSEMBLY COMPRISING A COVER GLASS FOR A VEHICLE LAMP AND AT LEAST ONE COMPONENT ON ITS OUTER SIDE
DISPOSITIF COMPRENANT UNE VITRE TRANSPARENTE D'UN FEU DE VÉHICULE ET AU MOINS UN COMPOSANT DISPOSÉ À L'EXTÉRIEUR SUR CELUI-CI

(43) Veröffentlichungstag der Anmeldung: 03.01.2018
(73) Patentinhaber: odelo GmbH, 70329 Stuttgart (DE)
(72) Erfinder: DEGER, Rüdiger, 73728 Esslingen (DE); MELZER, Horst, 71364 Winnenden (DE)
(74) Vertreter: Benninger, Johannes

(56) Entgegenhaltungen:
- WO-A1-2005/115796
- WO-A1-2013/189064
- DE-A1-102011 119 372
- DE-A1-102012 102 922
- DE-B- 1 019 622
- US-A1- 2015 204 500

## Beschreibung

Die Erfindung betrifft eine Anordnung bestehend aus einer Lichtscheibe für eine Fahrzeugleuchte mit vorzugsweise auf deren Außenseite aufgesetztem Bauteil gemäß dem Oberbegriff des Anspruchs 1.

Zur Gliederung von Fahrzeugaußenflächen oder Betonung einzelner Partien ist bekannt, Bauteile, wie etwa Zierleisten, mit oder ohne Funktion einzusetzen, die hinsichtlich Material- und/oder Farbwahl in Kontrast und/oder in stimmigem Ton zur Farbe in ihrer Umgebung gehalten sind.

Beispiele deren Anordnung sind um Fensterflächen herum, am oder um den Kühlergrill herum, am Kofferraumdeckel, über den Radläufen, entlang und auf Höhe der Schulter- oder Gürtellinie, entlang der Dachlinie.

Dabei wird ein besonders stimmiges Gesamtbild erhalten, wenn ein solches Bauteil nicht an einer Unterbrechung einer vermeintlich als einheitlich wahrgenommenen Ansichtsfläche endet, sondern sich zumindest optisch scheinbar darüber hinweg setzt.

Solche Unterbrechung finden sich an Fahrzeugaußenflächen beispielsweise im Bereich von Karosserieöffnungen für Fahrzeugleuchten.

Eine Fahrzeugleuchte umfasst beispielsweise einen im Wesentlichen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Fahrzeugleuchte.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen.

Die Lichtscheibe ist durch eine heutzutage meist aus einem Kunststoff hergestellte, transparente Abdeckung gebildet, welche den Leuchteninnenraum abschließt und die darin beherbergten Bauelemente, wie etwa ein oder mehrere Leuchtmittel, Reflektoren sowie alternativ oder zusätzlich vorgesehene Optikelemente gegen Witterungseinflüsse schützt.

Die Lichtscheibe kann als ein Optikelement ausgebildet sein, beispielsweise indem sie vorzugsweise an deren Innenseite mit einer zur Erzeugung einer oder mehrerer, jeweils zu den einzelnen Lichtfunktionen gesetzlich vorgegebener Lichtverteilungen beitragenden optischen Struktur versehen ist.

Die Lichtscheibe einer Fahrzeugleuchte wird dabei sowohl als Unterbrechung innerhalb der Fahrzeugaußenfläche, als auch durch ihren Beitrag zur Lichtverteilung einer oder mehrerer Lichtfunktionen und deren Austritt durch sie hindurch besonders wahrgenommen.

Soll ein eingangs erwähntes Bauteil optisch über eine durch die Lichtscheibe einer Fahrzeugleuchte gebildete Unterbrechung hinweg führen, so ist dessen Befestigung auf der dem Leuchteninnenraum der Fahrzeugleuchte abgewandten Außenseite der Lichtscheibe erforderlich.

Umzusetzen ist hierzu eine Befestigung des Bauteils, wie etwa einer Zierleiste, auf der Außenseite der Lichtscheibe unter Einhaltung von sich durch Fugen- und Oberflächentoleranz zwischen den Fügepartnern Lichtscheibe und Bauteil ergebender Toleranzen. Durch die Toleranzkette und Formabweichung der Einzelteile sowie eine hohe Biegesteifigkeit eines als Zierleiste ausgeführten Bauteils können geforderte Fugen-Spalt und Oberflächentoleranzen mit einer herkömmlichen Befestigung nicht oder nur mit großem Aufwand verwirklicht werden.

Eine herkömmliche Befestigung eines insbesondere als Zierleiste ausgeführten Bauteils auf einer Außenseite einer Lichtscheibe sieht ein Aufkleben, ein Aufschrauben oder ein Aufschweißen des Bauteils auf die Außenseite der Lichtscheibe vor.

Beim Aufkleben wird ein Bauteil, wie etwa eine Zierleiste, mittels doppelseitigem Klebeband auf eine Lichtscheibe aufgeklebt. Bei hohem Toleranzausgleich einhergehend mit hoher Biegesteifigkeit der Zierleiste genügt dies nicht zur Angleichung der Fügepartner. Das Klebeband versagt.

Bei hoher Biegesteifigkeit der Zierleiste kann der Toleranzausgleich beziehungsweise die Angleichung der Fügepartner zueinander nicht durch das Klebeband erfolgen. Hierzu müssten die Kräfte innerhalb des Klebebands größer sein, als die zur Überwindung der Formabweichung notwendige Kraft.

Alternativ können Bauteile, wie etwa Zierleisten, auf Lichtscheiben aufgeschraubt werden. Hierdurch besteht die Gefahr, die typischerweise aus sprödem PMMA bestehende Lichtscheibe zu beschädigen. Dies ist durch einen erhöhten Spannungseintrag in die Lichtscheibe im Bereich der Verschraubung bedingt. Ein Austausch der Zierleiste im Kundendienstfall ist mangels Zugänglichkeit des der Außenseite der Lichtscheibe abgewandten Leuchteninnenraums nicht möglich. Darüber hinaus können durch die Verschraubung oder bis zur Herstellung der Verschraubung Verunreinigungen in den Leuchteninnenraum eindringen. Dies macht zusätzliche Maßnahmen zur Abdichtung des beispielsweise als Zierleiste ausgeführten Bauteils auf der Lichtscheibe notwendig.

Eine weitere Alternative sieht ein Aufschweißen der Bauteile, wie etwa Zierleisten, vor. Nachteilig hieran ist neben den mit einem hohen Toleranzausgleich einhergehenden Spannungen und der Positionierung sowie des Andrückens des Bauteils während des Verschweißens, dass ein Austausch des Bauteils, insbesondere einer Zierleiste, beispielsweise während eines Kundendiensts, unter Beibehaltung der Fahrzeugleuchte, auf deren Lichtscheibe das Bauteil angeordnet ist, ausgeschlossen ist.

Durch US 2015/204500 A1 ist eine Anordnung mit einer Lichtscheibe für eine Fahrzeugleuchte sowie mindestens einem auf der Lichtscheibe angeordneten Träger bekannt. Eine Rastverbindung ist zwischen dem Träger und der Lichtscheibe ausgebildet. Die Lichtscheibe ist mit mindestens einem von deren Außenseite her zugänglichen ersten Rastelement ausgestattet. Der Träger weist mindestens ein mit dem wenigstens einen ersten Rastelement korrespondierendes zweites Rastelement auf. Auf den Träger kann eine Zierleiste aufgeclipst werden. Hierzu ist eine zusätzliche Rastverbindung zwischen dem Träger und der Zierleiste ausgebildet.

Durch DE 10 2011 119 372 A1 ist eine Anordnung mit einer Lichtscheibe für eine Fahrzeugleuchte sowie mindestens einem auf der Lichtscheibe angeordneten Bauteil bekannt. Eine Rastverbindung ist zwischen dem Bauteil und der Lichtscheibe ausgebildet. Die Lichtscheibe ist mit mindestens einem von deren Außenseite her zugänglichen ersten Rastelement ausgestattet. Das Bauteil weist mindestens ein mit dem wenigstens einen ersten Rastelement korrespondierendes zweites Rastelement auf.

Durch WO 2005/115796 A1 ist eine Anordnung mit einer Lichtscheibe für eine Fahrzeugleuchte sowie mindestens einem auf der Lichtscheibe angeordneten Bauteil bekannt. Dabei kann eine Rastverbindung zwischen dem Bauteil und der Lichtscheibe ausgebildet sein. Alternativ oder zusätzlich kann das Bauteil auf die Lichtscheibe aufgeklebt sein, vornehmlich mit doppelseitigem Klebeband. Die Lichtscheibe ist mit mindestens einem von deren Außenseite her zugänglichen ersten Rastelement ausgestattet. Das Bauteil weist mindestens ein mit dem wenigstens einen ersten Rastelement korrespondierendes zweites Rastelement auf. Zwischen dem Bauteil und der Lichtscheibe kann eine Blende eingebracht sein, welche durch die Verrastung zwischen Bauteil und Lichtscheibe ebenfalls mit getragen wird.

Durch DE 1 019 622 B ist eine Anordnung mit einer Lichtscheibe für eine Fahrzeugleuchte sowie mindestens einem auf der Lichtscheibe angeordneten Bauteil bekannt. Eine Rastverbindung ist zwischen dem Bauteil und der Lichtscheibe ausgebildet.

Durch DE 10 2012 102 922 A1 ist eine Anordnung mit einem Linsenkörper für eine Fahrzeugleuchte sowie mindestens einem um den Linsenkörper herum angeordneten Bauteil bekannt. Eine Rastverbindung ist zwischen dem Bauteil und dem Linsenkörper ausgebildet.

Eine Aufgabe der Erfindung ist es, eine Anordnung mit einem auf einer Außenseite einer Lichtscheibe einer Fahrzeugleuchte angeordneten Bauteil, insbesondere einer Zierleiste, zu schaffen, welche auch bei vorhandenen Form- und Bauteiltoleranzen eine zuverlässige Anbringung eines Bauteils auf einer Lichtscheibe ermöglicht.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Die Erfindung sieht demnach eine Anordnung mit einer Lichtscheibe für eine Fahrzeugleuchte und mit einem auf deren Außenseite befestigten, beispielsweise aufgesetzten Bauteil vor.

Das Bauteil ist hierbei mittels einer Rastverbindung auf der Außenseite der Lichtscheibe befestigt.

Eine auch als Klipsverbindung oder als Schnappverbindungen bezeichenbare Rastverbindung umfasst korrespondierende Rastelemente, von denen wenigstens eines elastisch verformbar ist und bei der Herstellung der Rastverbindung im Anschluss an eine Verformung mit mindestens einem anderen lösbar oder unlösbar verhakt. Beispiele für derart korrespondierende Rastelemente sind ein elastisch verformbares Rastmittel und eine Hintergreifung.

Die Lichtscheibe für eine Fahrzeugleuchte mit auf deren Außenseite aufgesetztem Bauteil ist hierbei mit mindestens einem von deren Außenseite her zugänglichen ersten Rastelement ausgestattet.

Das auf der Außenseite der Lichtscheibe aufgesetzte Bauteil weist mindestens ein mit dem wenigstens einen ersten Rastelement korrespondierendes zweites Rastelement auf.

Die Lichtscheibe weist zumindest eine für den Durchtritt von Licht wenigstens einer Lichtfunktion vorgesehene Lichtdurchtrittsflächenpartie auf, sowie mindestens eine zur Anordnung wenigstens eines Bauteils auf deren Außenseite vorgesehene Verblendungspartie.

Das mindestens eine erste Rastelement ist innerhalb der wenigstens einen Verblendungspartie vorgesehen.

Eine Verblendungspartie kann zwischen Lichtdurchtrittsflächenpartien vorgesehen sein, beispielsweise zur optischen Unterteilung oder Trennung der für unterschiedliche Lichtfunktionen vorgesehenen Lichtdurchtrittsflächen auch im ausgeschalteten Zustand beziehungsweise bei momentan inaktiver Lichtfunktion.

Das oder die ersten Rastelemente sind an einem mit der Lichtscheibe verbundenen Träger ausgebildet. Der Träger ist stoffschlüssig mit der Lichtscheibe verbunden, wobei das oder die ersten Rastelemente von der Außenseite der Lichtscheibe her zugänglich ausgebildet sind.

Der Träger ist von der aus Kunststoff hergestellten Lichtscheibe umspritzt.

Der Träger besteht aus einem anderen Werkstoff, als die Lichtscheibe.

Vorzugsweise handelt es sich hierbei um einen weniger spröden Werkstoff, als bei dem Werkstoff der Lichtscheibe.

Bevorzugt besteht die Lichtscheibe aus kurz als PMMA bezeichnetem Polymethylmethacrylat.

Es ist ersichtlich, dass die Erfindung durch eine Anordnung einer Zierleiste auf der Außenseite einer Lichtscheibe verwirklicht sein kann, welche Anordnung wenigstens eines stoffschlüssig mit der Lichtscheibe verbundenen ersten Rastelements sowie zumindest ein mit diesem korrespondierendes zweites Rastelement an dem beispielsweise als eine Zierleiste ausgeführten Bauteil umfasst. Die ersten und zweiten Rastelemente genügen der Ausbildung einer Rastverbindung zwischen dem beispielsweise als eine Zierleiste ausgeführten Bauteil und der Lichtscheibe.

Die Erfindung schafft die Möglichkeit, ein Bauteil auf einer Außenseite einer Lichtscheibe anzuordnen.

Die Erfindung beseitigt die aus dem Stand der Technik bekannten Nachteile durch eine Rastverbindung, mittels der das beispielsweise als eine Zierleiste ausgeführte Bauteil auf der Außenseite der Lichtscheibe befestigt wird.

Hierdurch findet ein Toleranzausgleich durch eine kraft- und formschlüssige Befestigung innerhalb eines in sich dichten Bereichs statt, verwirklicht durch eine Verrastung des beispielsweise als eine Zierleiste ausgeführten Bauteils auf der Lichtscheibe mittels einer zwischen dem Bauteil und der Außenseite der Lichtscheibe ausgebildeten Rastverbindung, welche wenigstens ein kurz als Verrastungsgeometrie bezeichnetes, an die Lichtscheibe angeordnetes erstes Rastelement, sowie zumindest ein mit diesem korrespondierendes zweites Rastelement am Bauteil, bevorzugt an oder auf dessen der Lichtscheibe zugewandter Rückseite oder zumindest für das mindestens eine Rastelement von der Rückseite des Bauteils her zugänglich, umfasst.

Dabei ist die lichtscheibenseitige Verrastungsgeometrie an einem gesondert, stoffschlüssig mit der Lichtscheibe verbundenen Träger ausgebildet.

In jedem Fall verfügen die Außenseite der Lichtscheibe und das beispielsweise als eine Zierleiste ausgeführte Bauteil über korrespondierende Rastelemente.

Die ersten Rastelemente der Lichtscheibe sind an einem Träger ausgebildet, wobei sie auf der Außenseite der Lichtscheibe aufstehen oder von dieser her zugänglich sind.

Beispielsweise kann der erwähnte Träger auf der Außenseite der Lichtscheibe vorgesehen sein.

Der Träger kann aus einem für Rastelemente vorteilhafteren, da weniger spröden Material als die typischerweise aus PMMA bestehende Lichtscheibe hergestellt sein.

Träger und Lichtscheibe sind durch Umspritzen Trägers von der Lichtscheibe einstückig hergestellt.

Der Träger kann aus einem relativ biegeweichen Werkstoff hergestellt sein, so dass dessen Anpassung an die Geometrie der Außenseite der Lichtscheibe während des Umspritzens ohne Spannungseintrag in die Lichtscheibe erfolgt.

Hierdurch können der Träger und die Lichtscheibe auch bei biegesteifer Zierleiste und hohem Toleranzausgleich problemfrei miteinander verbunden werden, bevor nach Herstellung dieser Verbindung die Zierleiste per Rastverbindung auf dem Träger befestigt wird.

Die Erfindung ermöglicht eine Befestigung einer Zierleiste auf einer Lichtscheibe mit einem zusätzlichen Ausgleich von Formabweichungen.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.

So ergibt sich ein Vorteil durch die Eliminierung der Formtoleranzen der Lichtscheibe und des Trägers zueinander durch die Anpassung der Zierleiste zum Träger.

Ein weiterer Vorteil ergibt sich durch eine Eliminierung der Bauteiltoleranzen von Lichtscheibe und Träger zueinander.

Ein zusätzlicher Vorteil ergibt sich durch eine Anpassung der Formabweichung der Zierleiste zum Träger.

Ein darüber hinausgehender Vorteil ergibt sich durch die Schaffung einer Möglichkeit einer Kundendienstlösung, einhergehend mit einer Individualisierungsmöglichkeit.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:

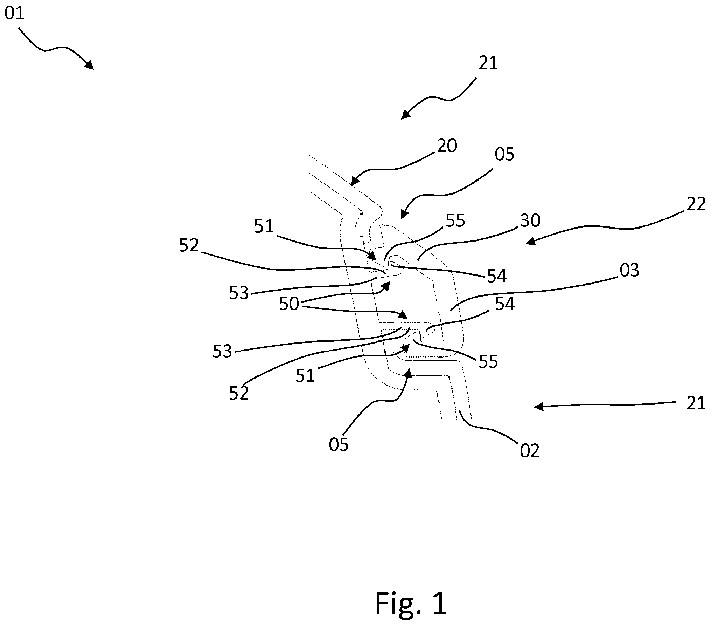

Fig. 1 ein nicht-erfindungsgemäßes Beispiel einer Anordnung mit einer Lichtscheibe für eine Fahrzeugleuchte und mit einem auf deren in zusammengebautem Zustand der Fahrzeugleuchte einem von einem Leuchtengehäuse und der Lichtscheibe umschlossenen Leuchteninnenraum abgewandter Außenseite angeordneten Bauteil in einem Querschnitt.

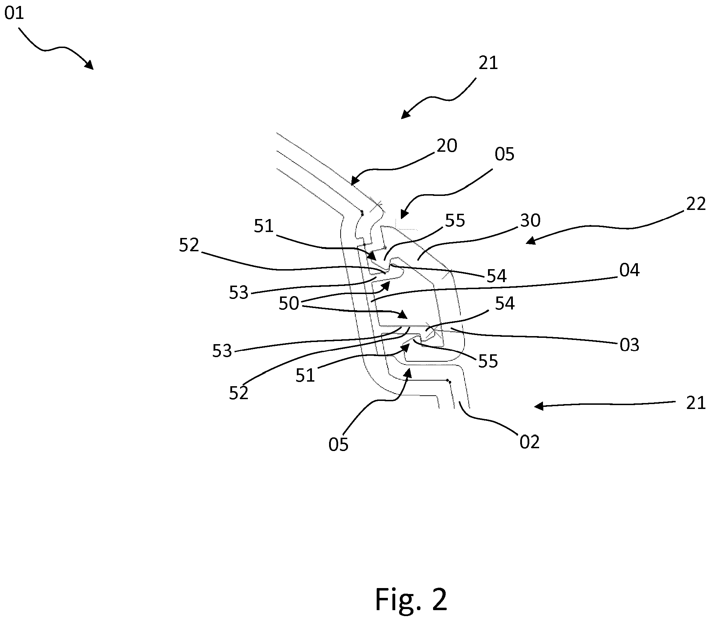

Fig. 2 ein erfindungsgemäßes Ausführungsbeispiel einer Anordnung mit einer Lichtscheibe für eine Fahrzeugleuchte und mit einem auf deren in zusammengebautem Zustand der Fahrzeugleuchte einem von einem Leuchtengehäuse und der Lichtscheibe umschlossenen Leuchteninnenraum abgewandter Außenseite angeordneten Bauteil in einem Querschnitt.

Eine in Fig. 1, Fig. 2 ganz oder in Teilen dargestellte Anordnung 01 umfasst eine Lichtscheibe 02 für eine Fahrzeugleuchte sowie mindestens ein auf deren in zusammengebautem Zustand der Fahrzeugleuchte einem von einem Leuchtengehäuse und der Lichtscheibe umschlossenen Leuchteninnenraum abgewandter Außenseite 20 angeordnetes Bauteil 03.

Die Anordnung 01 zeichnet sich durch eine Rastverbindung 05 zwischen dem Bauteil 03 und der Lichtscheibe 02 aus.

Die Erfindung sieht demnach eine Anordnung 01 mit einer Lichtscheibe 02 für eine Fahrzeugleuchte und mit einem auf deren Außenseite 20 befestigten, beispielsweise aufgesetzten Bauteil 03 vor.

Das Bauteil 03 ist hierbei mittels einer Rastverbindung 05 auf der Außenseite 20 der Lichtscheibe 02 befestigt.

Eine auch als Klipsverbindung oder als Schnappverbindungen bezeichenbare Rastverbindung 05 umfasst korrespondierende Rastelemente 50, 51, von denen wenigstens eines elastisch verformbar ist und bei der Herstellung der Rastverbindung 05 im Anschluss an eine Verformung mit mindestens einem anderen lösbar oder unlösbar verhakt. Beispiele für derart korrespondierende Rastelemente 50, 51 sind ein oder mehrere elastisch verformbares Rastmittel 52, beispielsweise umfassend an federbelasteten Schwingen 53 angeordnete Rastnasen 54, und eine oder mehrere Hintergreifungen 55.

Die Lichtscheibe 02 für eine Fahrzeugleuchte mit auf deren Außenseite 20 aufgesetztem Bauteil 03 ist mit mindestens einem von deren Außenseite 20 her zugänglichen ersten Rastelement 50 ausgestattet und das auf der Außenseite 20 der Lichtscheibe 02 aufgesetzte beziehungsweise aufsetzbare Bauteil 03 ist auf seiner der Lichtscheibe zugewandten Seite mit mindestens einem mit dem wenigstens einen ersten Rastelement 50 korrespondierenden zweiten Rastelement 51 ausgestattet.

Die Lichtscheibe 02 kann zumindest eine für den Durchtritt von Licht wenigstens einer Lichtfunktion vorgesehene Lichtdurchtrittsflächenpartie 21 aufweisen.

Darüber hinaus kann die Lichtscheibe 02 mindestens eine zur Anordnung wenigstens eines Bauteils 03 auf deren Außenseite 20 vorgesehene Verblendungspartie 22 aufweisen.

Das mindestens eine erste Rastelement 50 ist dabei bevorzugt innerhalb der wenigstens einen Verblendungspartie 22 vorgesehen.

Vorteilhaft ist zwischen Lichtdurchtrittsflächenpartien 21 eine Verblendungspartie 22 vorgesehen, beispielsweise zur optischen Unterteilung oder Trennung der für unterschiedliche Lichtfunktionen vorgesehenen Lichtdurchtrittsflächen auch im ausgeschalteten Zustand beziehungsweise bei momentan inaktiver Lichtfunktion beziehungsweise inaktiven Lichtfunktionen.

Alternativ oder zusätzlich kann eine Verblendungspartie 22 benachbart zu einer Lichtdurchtrittsflächenpartie 21 vorgesehen sein, beispielsweise ein-, zwei- oder mehrseitig bis hin zu eine Lichtdurchtrittsflächenpartie 21 umgebend.

Erfindungsgemäß sind das oder die ersten Rastelemente 50 an einem mit der Lichtscheibe 02 verbundenen Träger 04 ausgebildet, wie dies bei der in Fig. 2 dargestellten Anordnung 01 der Fall ist.

Das oder die ersten Rastelemente 50 sind hierbei von der Außenseite 20 der Lichtscheibe 02 her zugänglich am Träger 04 ausgebildet.

Erfindungsgemäß ist der Träger 04 stoffschlüssig mit der Lichtscheibe 02 verbunden.

Der Träger 04 und die Lichtscheibe 02 dieser Anordnung 01 sind durch Umspritzen des Trägers 04 mit der Lichtscheibe 02 einstückig hergestellt.

Der vorteilhaft ebenfalls aus einem Kunststoff hergestellte Träger 04 ist demnach von der aus Kunststoff hergestellten Lichtscheibe 02 umspritzt.

Alternative nicht-erfindungsgemäße stoffschlüssige Verbindungsmöglichkeiten des Trägers 04 und der Lichtscheibe 02 wären Verschweißen oder Verkleben des Trägers 04 mit der Außenseite 20 der Lichtscheibe 02.

Erfindungsgemäß besteht der Träger 04 aus einem anderen Werkstoff, als die Lichtscheibe 02.

Vorzugsweise handelt es sich hierbei um einen weniger spröden Werkstoff, als bei dem Werkstoff der Lichtscheibe 02.

Demnach ist der Träger 04 vorteilhaft aus einem für Rastelemente geeigneten, weniger spröden Material als die typischerweise aus kurz als PMMA bezeichnetem Polymethylmethacrylat bestehende Lichtscheibe 02 hergestellt.

So kann der Träger 04 aus einem relativ biegeweichen Werkstoff hergestellt sein, so dass dessen Anpassung an die Geometrie der Außenseite 20 der Lichtscheibe 02 beispielsweise während des Umspritzens ohne Spannungseintrag in die Lichtscheibe 02 erfolgt.

Auch wird hierdurch ein schädlicher Spannungseintrag in die Lichtscheibe 02 durch den Träger 04 nach Vereinigung mit der Lichtscheibe 02 vermieden.

Hierdurch können der Träger 04 und die Lichtscheibe 02 auch bei biegesteifem Bauteil 03 und hohem Toleranzausgleich problemfrei miteinander stoffschlüssig verbunden werden, bevor nach Herstellung dieser Verbindung das Bauteil 03 per Rastverbindung 05 auf dem mit der Lichtscheibe stoffschlüssig verbundenen Träger 04 befestigt wird.

Bevorzugt besteht die Lichtscheibe 02 aus kurz als PMMA bezeichnetem Polymethylmethacrylat.

Bei dem Bauteil 03 kann es sich um eine Zierleiste 30 handeln. Grundsätzlich kann das Bauteil 03 auch anderen Funktionen, als bloßer Verzierung und/oder Verschönerung dienen.

Es ist ersichtlich, dass die Erfindung durch eine Anordnung einer Zierleiste 30 auf der Außenseite 20 einer Lichtscheibe 02 verwirklicht sein kann.

Eine solche, die Lichtscheibe 02 und die Zierleiste 30 umfassende Anordnung 01 weist ein oder mehrere stoffschlüssig mit der Lichtscheibe 02 verbundene erste Rastelemente 50 sowie ein oder mehrere mit diesen korrespondierende zweite Rastelemente 51 an dem beispielsweise als eine Zierleiste 30 ausgeführten Bauteil 03 auf.

Die ersten Rastelemente 50 und zweiten Rastelemente 51 genügen der Ausbildung einer Rastverbindung 05 zwischen dem beispielsweise als eine Zierleiste 30 ausgeführten Bauteil 03 und der Lichtscheibe 02.

Die Erfindung schafft die Möglichkeit, ein Bauteil 03 auf einer Außenseite 20 einer Lichtscheibe 02 anzuordnen.

Die Erfindung beseitigt die aus dem Stand der Technik bekannten Nachteile durch eine Rastverbindung 05, mittels der das beispielsweise als eine Zierleiste 30 ausgeführte Bauteil 03 auf der Außenseite 20 der Lichtscheibe 02 befestigt wird.

Hierdurch findet ein Toleranzausgleich durch eine kraft- und formschlüssige Befestigung innerhalb eines in sich dichten Bereichs statt, verwirklicht durch eine Verrastung des beispielsweise als eine Zierleiste 30 ausgeführten Bauteils 03 auf der Lichtscheibe 02 mittels einer zwischen dem Bauteil 03 und der Außenseite 20 der Lichtscheibe 02 ausgebildeten Rastverbindung 05.

Diese Rastverbindung 05 umfasst wenigstens ein kurz als Verrastungsgeometrie bezeichnetes, an der Außenseite 20 der Lichtscheibe 02 angeordnetes, zumindest von dort aus zugängliches, erstes Rastelement 50.

Darüber hinaus umfasst diese Rastverbindung 05 zumindest ein mit dem mindestens einen ersten Rastelement 50 korrespondierendes zweites Rastelement 51 am Bauteil 51.

Das mindestens eine zweite Rastelement 51 ist bevorzugt an oder auf der der Lichtscheibe 02 zugewandter Rückseite des Bauteils 03 angeordnet, oder zumindest für das mindestens eine auf der Außenseite 20 der Lichtscheibe 02 vorgesehene beziehungsweise von dort aus zugängliche erste Rastelement 50 von der Rückseite des Bauteils 03 her zugänglich.

Dabei ist die lichtscheibenseitige Verrastungsgeometrie an einem gesondert, stoffschlüssig mit der Lichtscheibe 02 verbundenen Träger 04 ausgebildet.

In jedem Fall verfügen die Außenseite 20 der Lichtscheibe 02 und das beispielsweise als eine Zierleiste 30 ausgeführte Bauteil 03 über korrespondierende Rastelemente 50, 51.

Die Erfindung löst demnach die ihr zu Grunde liegende Aufgabe durch eine als Rastverbindung 05 ausgeführte kraft- und formschlüssige Verbindung mit einer Rastgeometrie.

Das oder die ersten Rastelemente 50 der Lichtscheibe 02 sind an einem Träger 04 ausgebildet, wobei sie auf der Außenseite 20 der Lichtscheibe 02 aufstehen oder von dieser her zugänglich sind.

Beispielsweise kann der erwähnte Träger 04 auf der Außenseite 20 der Lichtscheibe 02 vorgesehen sein.

Die Erfindung ermöglicht eine Befestigung eines beispielsweise als eine Zierleiste 30 ausgeführten Bauteils 03 auf der einem Leuchteninnenraum einer fertigen Fahrzeugleuchte abgewandten Außenseite 20 einer Lichtscheibe 02 mit einem zusätzlichen Ausgleich von Formabweichungen.

Die Erfindung kann durch oder in Zusammenhang mit einer Fahrzeugleuchte verwirklicht sein, welche beispielsweise einen im Wesentlichen von einem Leuchtengehäuse und einer Lichtscheibe 02 umschlossenen Leuchteninnenraum und mindestens ein darin beherbergtes, mindestens eine Lichtquelle umfassendes Leuchtmittel für wenigstens eine Lichtfunktion der Fahrzeugleuchte umfasst.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte. Beispiele für Fahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Für die einzelnen Lichtfunktionen sind zum Teil unterschiedliche Helligkeiten bzw. Sichtweiten sowie zum Teil unterschiedliche Lichtfarben zugeordnet.

Wenigstens einer Lichtquelle des Leuchtmittels einer Fahrzeugleuchte können ein oder mehrere zur Ausformung einer Lichtverteilung beitragende Optikelemente zur Lichtlenkung zugeordnet sein.

Die Lichtscheibe 02 ist durch eine aus einem Kunststoff hergestellte, transparente Abdeckung gebildet, welche den Leuchteninnenraum abschließt und die darin beherbergten Bauelemente, wie etwa ein oder mehrere Leuchtmittel, Reflektoren sowie alternativ oder zusätzlich vorgesehene Optikelemente gegen Witterungseinflüsse schützt.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben 02 unterteilt sein, von denen mehrere Kammern gleiche und/oder jede Kammer eine andere Lichtfunktionen erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe 02 angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein. Der Reflektor kann zumindest zum Teil durch ein separates Bauelement und/oder durch wenigstens einen Teil des Leuchtengehäuses selbst gebildet sein, beispielsweise vermittels einer zumindest teilweisen, reflektierenden Beschichtung.

Die Lichtscheibe 02 selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Anstelle mehrerer Lichtscheiben 02 können mehrere, jeweils beispielsweise durch eine Verblendungspartie 22 voneinander getrennte Lichtdurchtrittsflächenpartien 21 vorgesehen sein, beispielsweise je Lichtfunktion eine eigene Lichtdurchtrittsflächenpartie 21.

Alternativ oder zusätzlich ist denkbar, je Lichtfarbe eine eigene Lichtdurchtrittsflächenpartie 21 vorzusehen, die dann wiederum von einer benachbarten Lichtdurchtrittsflächenpartie 21 beispielsweise für Lichtfunktionen anderer Lichtfarben durch eine Verblendungspartie 22 mit innerhalb dieser auf der Außenseite 20 der Lichtscheibe 02 angeordnetem, beispielsweise als eine Zierleiste 30 ausgeführtem Bauteil 03 getrennt sein kann.

Wichtig ist hervorzuheben, dass auch Kombinationen der beschriebenen Ausgestaltungen und Ausführungsbeispiele in Verbindung mit einer Fahrzeugleuchte verwirklicht sein können.

Ebenfalls wichtig ist hervorzuheben, dass die Erfindung durch eine Lichtscheibe 02 einer Fahrzeugleuchte mit aufgesetztem Bauteil 03 verwirklicht sein kann, wobei zur Verbindung des Bauteils 03 mit der Lichtscheibe 02 eine durch korrespondierende Rastelemente 50, 51 gebildete Rastverbindung 05 vorgesehen ist. Erste, von der Außenseite 20 der Lichtscheibe 02 her zugängliche, beispielsweise an der Außenseite 20 der Lichtscheibe 02 angeordnete Rastelemente 50 sind elastisch verformbar, wohingegen beispielsweise zweite, auf der der Lichtscheibe 02 zugewandten Rückseite des Bauteils 03 angeordnete Rastelemente 51 als zerstörungsfrei unverformbare Hintergreifungen 55 ausgeführt sein können. Bei der Herstellung der Rastverbindung 05 verhakt das wenigstens eine erste elastisch verformbare Rastelement 50 im Anschluss an eine Verformung mit mindestens einem zweiten Rastelement 51 lösbar oder unlösbar. Das oder die auf der Außenseite 20 der Lichtscheibe 02 vorgesehenen und/oder von dort aus zugänglichen ersten Rastelemente 50 sind auf einem stoffschlüssig mit der Lichtscheibe 02 verbundenen Träger 04 aus einem anderen Material, als dem der Lichtscheibe 02 ausgebildet.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Anordnung
- 02: Lichtscheibe
- 03: Bauteil
- 04: Träger
- 05: Rastverbindung

- 20: Außenseite
- 21: Lichtdurchtrittsflächenpartie
- 22: Verblendungspartie

- 30: Zierleiste

- 50: erstes Rastelement
- 51: zweites Rastelement
- 52: Rastmittel
- 53: Schwinge
- 54: Rastnase
- 55: Hintergreifung

## Patentansprüche

1. Anordnung (01) mit einer Lichtscheibe (02) für eine Fahrzeugleuchte sowie mindestens einem auf der Außenseite der Lichtscheibe (02) angeordneten Bauteil (03, 30) und einer Rastverbindung (05) zwischen dem Bauteil (03, 30) und der Lichtscheibe (02), wobei:
- die Lichtscheibe (02) mit mindestens einem von deren Außenseite (20) her zugänglichen ersten Rastelement (50) ausgestattet ist und das Bauteil (03, 30) mindestens ein mit dem wenigstens einen ersten Rastelement (50) korrespondierendes zweites Rastelement (51) aufweist, und
- das oder die ersten Rastelemente (50) an einem mit der Lichtscheibe (02) verbundenen Träger (04) ausgebildet sind, und
- der Träger (04) stoffschlüssig mit der Lichtscheibe verbunden ist,
**dadurch gekennzeichnet, dass** der Träger (04) von der aus Kunststoff hergestellten Lichtscheibe (02) umspritzt ist und der Träger (04) aus einem anderen Werkstoff besteht, als die Lichtscheibe (02).

2. Anordnung nach Anspruch 1, wobei das mindestens eine erste Rastelement (50) elastisch verformbar ausgeführt ist.

3. Anordnung nach Anspruch 1 oder 2, wobei das mindestens eine auf einer der Lichtscheibe (02) zugewandten Rückseite des Bauteils (03, 30) angeordnete zweite Rastelement (51) als Hintergreifung (55) ausgeführt ist.

4. Anordnung nach einem der Ansprüche 1, 2 oder 3, wobei die Lichtscheibe (02) zumindest eine für den Durchtritt von Licht wenigstens einer Lichtfunktion vorgesehene Lichtdurchtrittsflächenpartie (21) sowie mindestens eine zur Anordnung wenigstens eines Bauteils (03, 30) auf deren Außenseite (20) vorgesehene Verblendungspartie (22) aufweist.

5. Anordnung nach Anspruch 4, wobei eine Verblendungspartie (22) zwischen Lichtdurchtrittsflächenpartien (21) vorgesehen ist.

6. Anordnung nach einem der voranstehenden Ansprüche, wobei der Träger (04) aus einem weniger spröden Material als die Lichtscheibe (02) hergestellt ist.

7. Anordnung nach einem der voranstehenden Ansprüche, wobei die Lichtscheibe (02) aus Polymethylmethacrylat (PMMA) besteht.

8. Anordnung nach einem der voranstehenden Ansprüche, wobei das Bauteil (03) eine Zierleiste (30) ist.

## Claims

1. An arrangement (01) with a light lens (02) for a vehicle lamp, and with at least one component (03, 30) arranged on the outer side of the light lens (02) and a latch connection (05) between the component (03, 30) and the light lens (02), wherein:
- the light lens (02) is provided with at least one first latch element (50) that is accessible from the outer side (20) of the light lens (02), and the component (03, 30) has at least one second latch element (51) corresponding with the at least one first latch element (50), and
- the first latch element or latch elements (50) is/are formed on a carrier (04) that is connected to the light lens (02), and
- the carrier (04) is connected to the light lens in a material-bonded manner,
**characterised in that** the carrier (04) is embedded in the injection-moulded light lens (02) that is made of plastic and **in that** the carrier (04) consists of a different material than the light lens (02).

2. The arrangement according to claim 1, wherein the at least one first latch element (50) is designed to be elastically deformable.

3. The arrangement according to claim 1 or 2, wherein the at least one second latch element (51) arranged on a component's (03, 30) back side, which faces toward the light lens (02), is designed as an undercut (55).

4. The arrangement according to one of the claims 1, 2, or 3, wherein the light lens (02) has at least one light-passage surface section (21) provided for the passage of light of at least one light function, as well as at least one facing section (22) provided on the outer side (20) of the light lens (02) for the arrangement of at least one component (03, 30).

5. The arrangement according to claim 4, wherein a facing section (22) is provided between light-passage surface sections (21).

6. The arrangement according to one of the previous claims, wherein the carrier (04) is produced of a less brittle material than the light lens (02).

7. The arrangement according to one of the previous claims, wherein the light lens (02) consists of polymethyl methacrylate (PMMA).

8. The arrangement according to one of the previous claims, wherein the component (03) is a trim strip (30).

## Revendications

1. Agencement (01) doté d'un diffuseur (02) pour un phare de véhicule ainsi que d'au moins une pièce (03, 30) agencée sur le côté extérieur dudit diffuseur (02), et d'une liaison par encliquetage (05) entre ladite pièce (03, 30) et ledit diffuseur (02) :
- le diffuseur (02) étant doté d'au moins un premier élément d'encliquetage (50) accessible par le côté extérieur (20) du diffuseur, et la pièce (03, 30) présentant au moins un deuxième élément d'encliquetage (51) correspondant audit au moins un premier élément d'encliquetage (50), et
- le ou les premiers éléments d'encliquetage (50) étant formés sur un support (04) relié au diffuseur (02), et
- ledit support (04) étant relié au diffuseur par liaison de matière,
**caractérisé en ce que** ledit support (04) est surmoulé par le diffuseur (02) fabriqué en matière plastique, et ledit support (04) étant constitué d'un matériau différent de celui du diffuseur (02).

2. Agencement selon la revendication 1, ledit au moins un premier élément d'encliquetage (50) étant réalisé de manière élastiquement déformable.

3. Agencement selon la revendication 1 ou 2, ledit au moins un élément d'encliquetage (51) agencé sur une face arrière de la pièce (03, 30) tournée vers le diffuseur (02) étant réalisé sous forme de prise arrière (55).

4. Agencement selon l'une quelconque des revendications 1, 2 ou 3, le diffuseur (02) présentant au moins une partie de surface de passage de la lumière (21) prévue pour le passage de la lumière d'au moins une fonction lumineuse ainsi qu'au moins une partie de masquage (22) prévue pour l'agencement d'au moins une pièce (03, 30) sur sa face extérieure (20).

5. Agencement selon la revendication 4, une partie de masquage (22) étant prévue entre les parties de surface de passage de la lumière (21).

6. Agencement selon l'une quelconque des revendications précédentes, le support (04) étant fabriqué dans un matériau moins fragile que le diffuseur (02).

7. Agencement selon l'une quelconque des revendications précédentes, le diffuseur (02) étant composé de polyméthylméthacrylate (PMMA).

8. Agencement selon l'une quelconque des revendications précédentes, la pièce (03) étant une moulure de décoration (30).
